# EUROPEAN PATENT SPECIFICATION

(11) **EP 3 930 078 B1**
(45) Date of publication and mention of the grant of the patent: **06.12.2023**
(21) Application number: 21181205.2
(22) Date of filing: 23.06.2021
(51) Int. Cl.: H01M 10/633, H01M 10/651

(54) **TEMPERATURE CONTROL METHOD FOR ENERGY STORAGE SYSTEM, AND ENERGY MANAGEMENT SYSTEM**
TEMPERATURREGELUNGSVERFAHREN FÜR EIN ENERGIESPEICHERSYSTEM UND ENERGIEVERWALTUNGSSYSTEM
PROCÉDÉ DE RÉGULATION DE TEMPÉRATURE POUR SYSTÈME DE STOCKAGE D'ÉNERGIE ET SYSTÈME DE GESTION D'ÉNERGIE

(30) Priority: 24.06.2020 CN 202010589815
(43) Date of publication of application: 29.12.2021
(73) Proprietor: Sungrow Power Supply Co., Ltd., Hefei, Anhui 230088 (CN)
(72) Inventor: LIU, Yang, Hefei, 230088 (CN); CAO, Wei, Hefei, 230088 (CN); CAI, Zhuang, Hefei, 230088 (CN); LI, Guohong, Hefei, 230088 (CN)
(74) Representative: Rooney, John-Paul

(56) References cited:
- CN-A- 110 137 619
- KR-A- 20170 104 763
- US-A- 5 937 664

## Description

### FIELD

The present disclosure relates to the technical field of energy storage, and in particular, to a temperature control method for an energy storage system, and an energy management system.

### BACKGROUND

An energy storage system is used to store electrical energy and supply power. In processes of power output, power transmission, power distribution, and power consumption of a power system, the energy storage system plays an important role in smooth transition, peak shaving and valley filling, frequency modulation and voltage regulation, etc.

Key components of the energy storage system include an energy storage battery, an energy storage converter, an energy management system and a temperature control system. In order to improve the service lifetime of the energy storage battery, it is important to ensure that the energy storage battery always operates within a stable and suitable temperature range.

In the temperature control system of conventional technologies, a control target temperature of the temperature control system is set at an optimal temperature T₀, and a temperature is controlled automatically according to a deviation between a real-time temperature of the energy storage system and the optimal temperature T₀. Specifically, an air conditioner operates in a cooling mode in a case that the real-time temperature of the energy storage system is higher than the optimal temperature T₀, and the air conditioner operates in a heating mode in a case that the real-time temperature of the energy storage system is less than the optimal temperature T₀.

However, the temperature control system runs twenty-four hours a day, and consumes a lot of power, which affects the power generation of the entire energy storage system.

KR20170104763A discloses a system and a method for managing the temperature of a battery. Specifically, a ratio value between the average consumable power of the heating and cooling device and an average discharge power prediction value of the battery is calculated based on the battery condition decided by using the provided battery information. One of the normal temperature range and the extreme temperature range is set as a reference value based on the calculated ratio value and the predetermined ratio set value, and the operation of the heating and cooling device is controlled based on the set reference value and the battery temperature.

CN110137619A discloses a method for controlling the temperature of an energy storage device in order to reduce power waste. The method includes the steps: obtaining the idle power generation amount of a photovoltaic power generation system and the battery temperature of the energy storage device, wherein the photovoltaic power generation system includes a photovoltaic array, the energy storage device, and a load, the energy storage device includes a refrigeration device and a battery, the idle power generation amount is a difference between the power generation amount of the photovoltaic array and the power consumption of the energy storage device and the load; determining the cooling temperature of the refrigeration device according to the idle power generation amount and the battery temperature, wherein the refrigeration device is configured to control the temperature of the battery.

US5937664A discloses a vehicle-use battery cooling system for cooling a battery mounted in a vehicle whose vehicle compartment is air conditioned by an air conditioner, so as to maintain the battery in a predetermined temperature range.

### SUMMARY

In view of the above, the present disclosure provides a temperature control method for an energy storage system and an energy management system to reduce power consumption of the temperature control system, thereby increasing power generation of the entire energy storage system.

In embodiments of the present disclosure, temperature control methods for an energy storage system are provided.

In an embodiment of the present disclosure, a temperature control method for an energy storage system is provided, and the method includes:
obtaining a real-time temperature of an energy storage battery;
determining whether the energy storage battery is in a charging-and-discharging state currently or after a preset time;
controlling, in a case that the energy storage battery is not in the charging-and-discharging state, the real-time temperature of the energy storage battery within a first preset range; and
controlling, in a case that the energy storage battery is in the charging-and-discharging state, the real-time temperature of the energy storage battery within a second preset range, comprising:
   comparing the real-time temperature T of the energy storage battery with a fifth threshold T5 and a sixth threshold T6, respectively, wherein the fifth threshold T5 is less than the sixth threshold T6, the fifth threshold T5 is the lower limit of the second preset range, and the sixth threshold T6 is the upper limit of the second preset range;
   controlling an air conditioner to start heating in a case that the real-time temperature T is less than that the fifth threshold T5; and
   controlling the air conditioner to start cooling in a case that the real-time temperature T is greater than the sixth threshold T6;
   where a lower limit of the first preset range is less than a lower limit of the second preset range, and an upper limit of the first preset range is greater than an upper limit of the second preset range.

In another embodiment of the present disclosure, based on any temperature control method of the foregoing embodiments, the controlling the real-time temperature of the energy storage battery within the first preset range includes:
comparing the real-time temperature T of the energy storage battery with a first threshold T1, a second threshold T2, a third threshold T3, and a fourth threshold T4, respectively, where the first threshold T1, the second threshold T2, the third threshold T3, and the fourth threshold T4 are in ascending order, the first threshold T1 is a lower limit of the first preset range, and the fourth threshold T4 is an upper limit of the first preset range;
turning on an air conditioner to start heating in a case that the real-time temperature T is less that the first threshold T1;
turning off the air conditioner in a case that the real-time temperature T is greater than or equal to the second threshold T2 and less than or equal to the third threshold T3; and
turning on the air conditioner to start cooling in a case that the real-time temperature T is greater than the fourth threshold T4.

In another embodiment of the present disclosure, based on any temperature control method of the foregoing embodiments, the real-time temperature T of the energy storage battery is represented by a real-time ambient temperature of the energy storage battery or a real-time battery cell temperature of the energy storage battery.

In another embodiment of the present disclosure, based on the foregoing temperature control method, in a case that the real-time temperature of the energy storage battery is represented by the real-time ambient temperature of the energy storage battery, the real-time ambient temperature of the energy storage battery is represented by a temperature of a return air outlet of the air conditioner.

In embodiments of the present disclosure, energy management systems are further provided.

In another embodiment of the present disclosure, an energy management system is provided, and the system includes:
an obtaining unit, configured to obtaining a real-time temperature of an energy storage battery;
a control unit, configured to:
   determine whether the energy storage battery is in a charging-and-discharging state currently or after a preset time;
   control the real-time temperature of the energy storage battery within a first preset range in a case that the energy storage battery is in the charging-and-discharging state; and
   control the real-time temperature of the energy storage battery within a second preset range in a case that the energy storage battery is in the charging-and-discharging state, comprising:
      compare the real-time temperature T of the energy storage battery with a fifth threshold T5 and a sixth threshold T6, respectively, wherein the fifth threshold T5 is less than the sixth threshold T6, the fifth threshold T5 is the lower limit of the second preset range, and the sixth threshold T6 is the upper limit of the second preset range;
      control the air conditioner to start heating in a case that the real-time temperature T is less than that the fifth threshold T5; and
      control the air conditioner to start cooling in a case that the real-time temperature T is greater than the sixth threshold T6;
   where a lower limit of the first preset range is less than a lower limit of the second preset range, and an upper limit of the first preset range is greater than an upper limit of the second preset range.

In another embodiment of the present disclosure, based on any energy management system of the foregoing embodiments, to control the real-time temperature of the energy storage battery within the first preset range, the control unit is further configured to:
compare the real-time temperature T of the energy storage battery with a first threshold T1, a second threshold T2, a third threshold T3, and a fourth threshold T4, respectively, where the first threshold T1, the second threshold T2, the third threshold T3, and the fourth threshold T4 are in ascending order, the first threshold T1 is a lower limit of the first preset range, and the fourth threshold T4 is an upper limit of the first preset range;
turn on an air conditioner to start heating in a case that the real-time temperature T is less that the first threshold T1;
turn off the air conditioner in a case that the real-time temperature T is greater than or equal to the second threshold T2 and less than or equal to the third threshold T3; and
turn on the air conditioner to start cooling in a case that the real-time temperature T is greater than the fourth threshold T4.

In another embodiment of the present disclosure, based on any energy management system of the foregoing embodiments, the real-time temperature T of the energy storage battery is represented by a real-time ambient temperature of the energy storage battery or a real-time battery cell temperature of the energy storage battery.

In another embodiment of the present disclosure, based on any energy management system of the foregoing embodiments, in a case that the real-time temperature of the energy storage battery is represented by the real-time ambient temperature of the energy storage battery, the real-time ambient temperature of the energy storage battery is represented by a temperature of a return air outlet of the air conditioner.

It can be seen from the above technical solutions, by utilizing the characteristic that a temperature range that an energy storage battery is allowed to maintain in a static state is wider than a temperature range that the energy storage battery is allowed to maintain in a charging-and-discharging state, different target temperature ranges are set according to whether the energy storage battery is in the static state or the charging-and-discharging state in the present disclosure. Therefore, the number of air-conditioning changes is significantly reduced in a whole day, and the power consumption of the temperature control system is reduced, thereby increasing the power generation of the entire energy storage system.

### BRIEF DESCRIPTION OF THE DRAWINGS

For clearer illustration of the technical solutions according to embodiments of the present disclosure or conventional techniques, hereinafter briefly described are the drawings to be applied in embodiments of the present disclosure or conventional techniques.
Figure 1 is a flowchart of a temperature control method for an energy storage system (not part of the present invention);
Figure 2 is a flowchart of an implementation of step S03 in the temperature control method for the energy storage system shown in Figure 1;
Figure 3 is a flowchart of an implementation of step S04 in the temperature control method for the energy storage system shown in Figure 1;

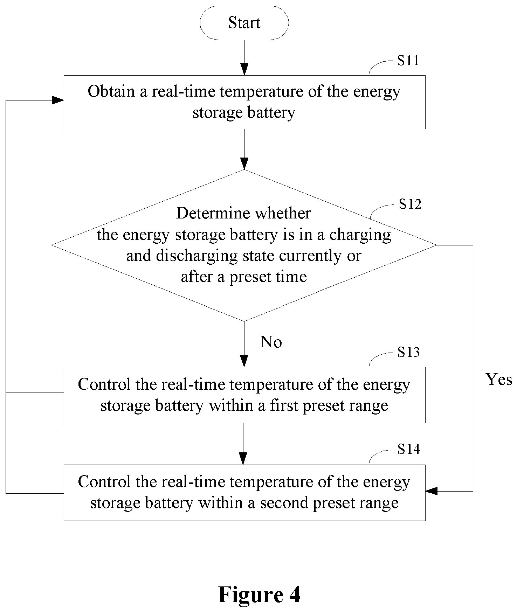

Figure 4 is a flowchart of a temperature control method for an energy storage system according to another embodiment of the present disclosure; and
Figure 5 is a structural schematic diagram of an energy management system.

### DETAILED DESCRIPTION OF EMBODIMENTS

Hereinafter technical solutions in embodiments of the present disclosure are described clearly and completely in conjunction with the drawings in embodiments of the present disclosure. Apparently, the described embodiments are only some rather than all of the embodiments of the present disclosure.

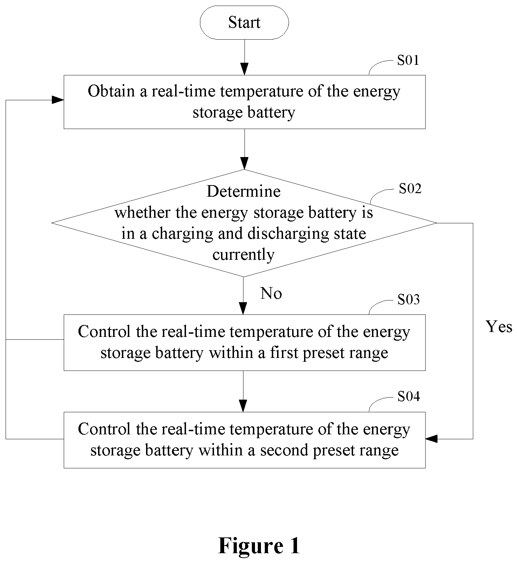

Reference is made to Figure 1, a temperature control method for an energy storage system (not part of the present invention) is provided to reduce the power consumption of the temperature control system, thereby increasing the power generation of the entire energy storage system.

The temperature control method includes steps S01 to S04.

In step S01, a real-time temperature of the energy storage battery is obtained.

Specifically, the real-time temperature of the energy storage battery may be a real-time ambient temperature of the energy storage battery or a real-time battery cell temperature of the energy storage battery, which is not limited herein. Further, the real-time ambient temperature of the energy storage battery may be a temperature of a return air outlet of an air conditioner, which is not limited herein. At the same moment, the difference between the real-time ambient temperature of the energy storage battery and the real-time battery cell temperature of the energy storage battery is basically a fixed value. Therefore, whether the temperature control system uses the real-time ambient temperature of the energy storage battery as feedback to automatically perform temperature control, or the temperature control system uses the real-time battery cell temperature of the energy storage battery as feedback to automatically perform temperature control, the temperature control effect achieved by both is the same.

In step S02, whether the energy storage battery is in a charging-and-discharging state currently is determined. If no, step S03 is executed; and if yes, step S04 is executed.

In step S03, the real-time temperature of the energy storage battery is controlled within a first preset range and then step S01 is returned to.

In step S04, the real-time temperature of the energy storage battery is controlled within a second preset range and then step S01 is returned to, where the first preset range is wider than the second preset range.

Specifically, the energy storage system is not always in the charging-and-discharging state twenty four hours a day, but also occasionally enters a static state under the control of an energy management system. The energy storage system being in the charging-and-discharging state means that the energy storage battery being in the charging-and-discharging state, and the energy storage system being in the static state means that the energy storage battery being in the static state. The energy storage battery requires a stable and suitable temperature range regardless of whether it is in the charging-and-discharging state or in the static state, and the energy storage battery requires a wider range in the static state than in the charging-and-discharging state. For example, taking the ambient temperature of an energy storage battery as an example, for a certain energy storage battery, the suitable ambient temperature range in the charging-and-discharging state is from 18 degrees Celsius to 28 degrees Celsius, and that in the static state is from 5 degrees Celsius to 50 degrees Celsius.

Because the narrower the temperature range required for automatic temperature control, the more frequent the air conditioning, and the higher the power consumption of the temperature control system. Therefore, if the temperature range required in the charging-and-discharging state is always maintained regardless of whether the energy storage battery is in the charging-and-discharging state or in the static state, it will bring high power consumption. In the embodiments of the present disclosure, the energy storage battery is controlled with a wider temperature range in the static state than in the charging-and-discharging state. For example, the above example is still referred, the energy storage battery may be controlled within the first preset range from 5 degrees Celsius to 50 degrees Celsius in the static state, and within the second preset range from 18 degrees Celsius to 28 degrees Celsius in the charging-and-discharging state. Therefore, the number of air-conditioning changes is significantly reduced in a whole day, and the power consumption of the temperature control system is reduced, thereby increasing the power generation of the entire energy storage system.

In summary, in embodiments of the preset disclosure, by utilizing the characteristic that the temperature range that the energy storage battery is allowed to maintain in the static state is wider than the temperature range that the energy storage battery is allowed to maintain in the charging-and-discharging state, different target temperature ranges are set according to whether the energy storage battery is in the static state or the charging-and-discharging state. Therefore, the number of air-conditioning changes is significantly reduced in a whole day, and the power consumption of the temperature control system is reduced, thereby increasing the power generation of the entire energy storage system.

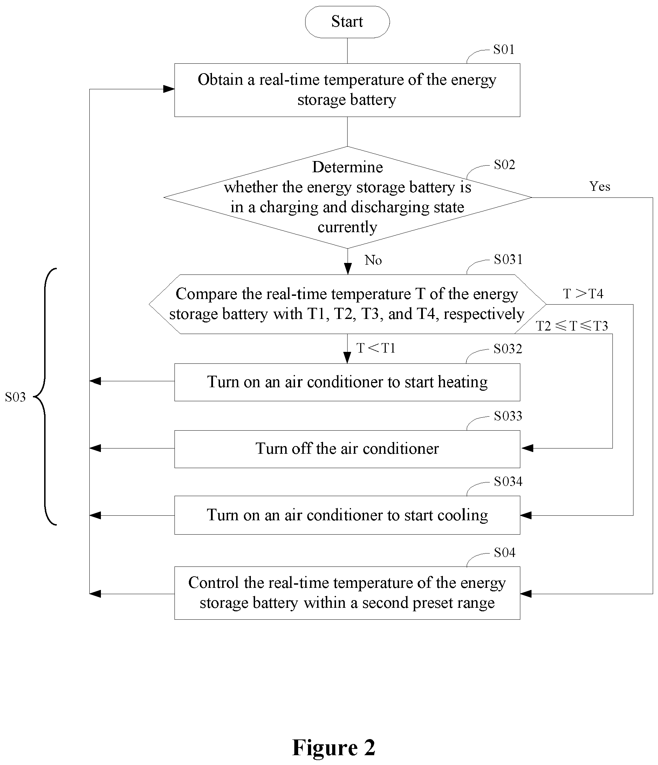

In an illustrative embodiment step S03 may include steps S031 to S034 as shown in Figure 2. Correspondingly, as shown in Figure 2, the temperature control method includes the following steps.

In step S01, a real-time temperature of an energy storage battery is obtained.

In step S02, whether the energy storage battery is in a charging-and-discharging state currently is determined. If no, step S031 is executed; and if yes, step S04 is executed.

In step S031, the real-time temperature T of the energy storage battery is compared with a first threshold T1, a second threshold T2, a third threshold T3, and a fourth threshold T4, respectively, where T1<T2<T3<T4. If T<T1, step S032 is executed; if T2≤T≤T3, step S033 is executed; and If T>T4, step S034 is executed.

In step S032, an air conditioner is turned on to start heating and then step S01 is returned to.

In step S033, the air conditioner is turned off and then step S01 is returned to.

In step S034, the air conditioner is turned on to start cooling and then step S01 is returned to.

When T1≤T<T2 or T3<T≤T4, the air conditioner maintains the current state. In the embodiment of the present disclosure, by setting two hysteresis intervals of T1-T2 and T3-T4, it is avoided that the air conditioner is frequently turned on and off at the critical temperature point.

The first threshold T1 is a lower limit of the first preset range, and the fourth threshold T4 is an upper limit of the first preset range. Specifically, the above example is still referred, T1 may be set to 5 degrees Celsius, T2 may be set to 10 degrees Celsius, T3 may be set to 45 degrees Celsius, and T4 may be set to 50 degrees Celsius. When the real-time temperature of the energy storage battery is within the first preset range, there will be a shutdown time, during which the air conditioner consumes zero power.

In step S04, the real-time temperature of the energy storage battery is controlled within a second preset range and then step S01 is returned to, where the first preset range is wider than the second preset range.

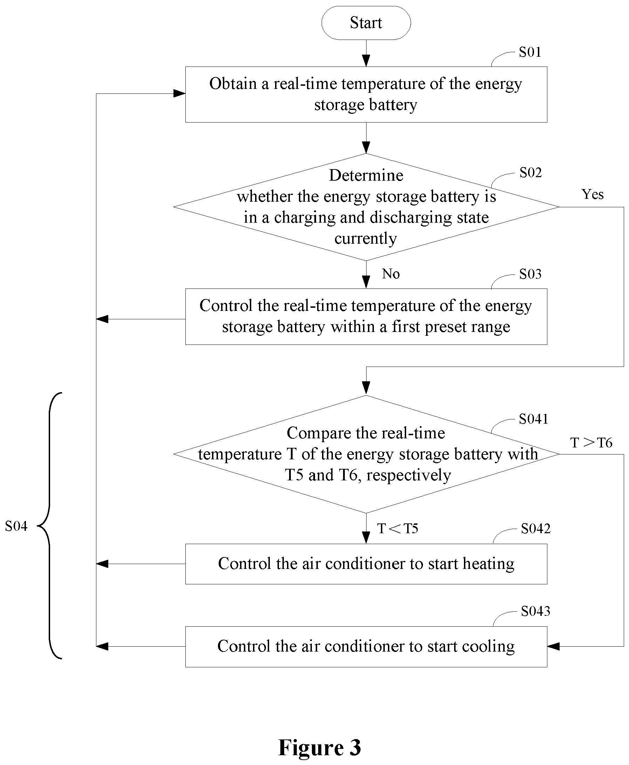

In an embodiment of the present disclosure, based on any temperature control method of the foregoing embodiments, step S04 may include steps S041 to S043 as shown in Figure 3. As shown in Figure 3, the temperature control method includes the following steps.

In step S01, the real-time temperature of an energy storage battery is obtained.

In step S02, whether the energy storage battery is in the charging-and-discharging state currently is determined. If no, step S031 is executed; and if yes, step S041 is executed.

In step S03, the real-time temperature of the energy storage battery is controlled within the first preset range and then step S01 is returned to.

In step S041, the real-time temperature T of the energy storage battery is compared with a fifth threshold T5 and a sixth threshold T6, respectively, where T1<T2<T5<T6<T3<T4. If T<T5, step S042 is executed; and If T>T6, step S043 is executed.

In step S042, the air conditioner is controlled to start heating and then step S01 is returned to.

In step S043, the air conditioner is controlled to start cooling and then step S01 is returned to.

When T5≤T≤T6, the air conditioner maintains the current state. In the embodiment of the present disclosure, by setting the hysteresis interval of T5-T6, it is avoided that the air conditioner is frequently turned on and off at the critical temperature point. The fifth threshold T5 is a lower limit of the second preset range, and the sixth threshold T6 is an upper limit of the second preset range. Specifically, the above example is still referred, T5 may be set to 18 degrees Celsius, and T6 may be set to 28 degrees Celsius.

Considering that there will be a certain response time in temperature adjustment of the air conditioner, in order to enable the real-time temperature of the energy storage battery to be adjusted to an optimal state when the energy storage battery starts to charge and discharge, based on any of the foregoing embodiments, the embodiment of the present disclosure further provides the following temperature control method for the energy storage system. The temperature control method includes steps S11 to S14.

In step S11, the real-time temperature of an energy storage battery is obtained.

In step S12, whether the energy storage battery is in the charging-and-discharging state currently or after a preset time is determined. If no, step S13 is executed; and if yes, step S14 is executed.

In step S13, the real-time temperature of the energy storage battery is controlled within the first preset range and then step S11 is returned to.

In step S14, the real-time temperature of the energy storage battery is controlled within the second preset range and then step S11 is returned to, where the first preset range is wider than the second preset range.

It should be noted that, although the suitable ambient temperature range in the charging-and-discharging state in the example is from 18 degrees Celsius to 28 degrees Celsius, and the suitable ambient temperature range in the static state is from 5 degrees Celsius to 50 degrees Celsius, it does not mean that T1 must be set to 5 degrees Celsius, T4 must be set to 50 degrees Celsius, T5 must be set to 18 degrees Celsius, and T6 must be set to 26 degrees Celsius. The above assignment is just an example, and other assignments are also available, for example, T1 is set to 6 degrees Celsius, T4 is set to 49 degrees Celsius, T5 is set to 19 degrees Celsius, and T6 is set to 27 degrees Celsius. That is, the specific temperature range is not limited as long as it can be ensured that the energy storage battery is within the required temperature range in the charging-and-discharging state and in the static state.

In addition, each temperature threshold is set in advance according to a type of the to-be-obtained real-time temperature of the energy storage battery. When the to-be-obtained real-time temperature of the energy storage battery is the real-time ambient temperature of the energy storage battery, each temperature threshold is set in advance for the real-time ambient temperature. When the to-be-obtained real-time temperature of the energy storage battery is the real-time battery cell temperature of the energy storage battery, each temperature threshold is set in advance for the real-time battery cell temperature of the energy storage battery.

Corresponding to the foregoing temperature control methods, embodiments of the present disclosure further provides energy management systems.

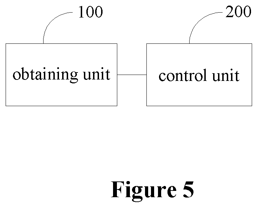

In an embodiment of the present disclosure, an energy management system is provided in the present disclosure as shown in Figure 5, and the energy management system includes an obtaining unit 100 and a control unit 200.

The obtaining unit 100 is configured to obtaining a real-time temperature of an energy storage battery.

The control unit 200 is configured to determine whether the energy storage battery is in a charging-and-discharging state currently. If no, the real-time temperature of the energy storage battery is controlled within a first preset range, and if yes, the real-time temperature of the energy storage battery is controlled within a second preset range, where the first preset range is wider than the second preset range.

The energy management system may be applied exclusively to one energy storage system, or may be applied to multiple energy storage systems at the same time. When applied to multiple energy storage systems at the same time, each energy storage system is provided with a local controller, the energy management system first sends monitoring instructions for an energy storage system to a corresponding local controller of said energy storage system, and then the corresponding local controller of said energy storage system monitors said energy storage system.

Considering that there will be a certain response time in temperature adjustment of the air conditioner, in order to enable the real-time temperature of the energy storage battery to be adjusted to an optimal state when the energy storage battery starts to charge and discharge, another embodiment of the preset disclosure is provided. The energy management system is provided in the present disclosure as shown in Figure 5, and the energy management system includes an obtaining unit 100 and a control unit 200.

The obtaining unit 100 is configured to obtaining a real-time temperature of an energy storage battery.

The control unit 200 is configured to determine whether the energy storage battery is in a charging-and-discharging state currently or after a preset time. If no, the real-time temperature of the energy storage battery is controlled within a first preset range, and if yes, the real-time temperature of the energy storage battery is controlled within a second preset range, where the first preset range is wider than the second preset range.

In another embodiment of the present disclosure, based on any energy management system of the foregoing embodiments, to control the real-time temperature of the energy storage battery within the first preset range, the control unit 200 is further configured to: compare the real-time temperature T of the energy storage battery with a first threshold T1, a second threshold T2, a third threshold T3, and a fourth threshold T4, respectively, where T1<T2<T3<T4, the first threshold T1 is a lower limit of the first preset range, and the fourth threshold T4 is an upper limit of the first preset range; turn on an air conditioner to start heating if T<T1; turn off the air conditioner if T2≤T≤T3; and turn on the air conditioner to start cooling T>T4.

In another embodiment of the present disclosure, based on any energy management system of the foregoing embodiments, to control the real-time temperature of the energy storage battery within the second preset range, the control unit 200 is further configured to: compare the real-time temperature T of the energy storage battery with a fifth threshold T5 and a sixth threshold T6, respectively, where T5<T6, the fifth threshold T5 is a lower limit of the second preset range, and the sixth threshold T6 is an upper limit of the second preset range; control the air conditioner to start cooling if T<T6; and control the air conditioner to start cooling if T>T6.

In another embodiment of the present disclosure, based on any energy management system of the foregoing embodiments, the real-time temperature of the energy storage battery is a real-time ambient temperature of the energy storage battery or a real-time battery cell temperature of the energy storage battery.

In another embodiment of the present disclosure, based on the foregoing energy management system, the real-time ambient temperature of the energy storage battery is a temperature of a return air outlet of the air conditioner.

It should be noted that the various embodiments in the present disclosure are described herein in a progressive manner. Each embodiment focuses on the differences from other embodiments, and the same or similar parts between the various embodiments can be referred to each other. For the systems disclosed in the embodiments, since they correspond to the methods disclosed in the embodiments, the description is relatively simple, and the relevant parts can be referred to the description of the methods.

It should be further noted that a relationship term such as "the first" and "the second" herein is only used to distinguish one entity or operation from another entity or operation, and does not necessarily require or imply that there is an actual relationship or sequence between these entities or operations. Furthermore, terms "include", "comprise" or any other variations are intended to cover non-exclusive "include", so that a process, a method, an object or a device including a series of factors not only include the factors, but also include other factors not explicitly listed, or also include inherent factors of the process, the method, the object or the device. Without more limitation, a factor defined in a sentence "include one..." does not exclude a case that there is also another same factor in the process, the method, the object or the device including the described factor.

Professionals shall further realize that the units and algorithm steps of each example described in combination with the embodiments disclosed herein can be implemented by electronic hardware, computer software, or a combination of both. In order to clearly illustrate the interchangeability of hardware and software, the composition and steps of each example have been generally described in accordance with the function in the above description. Whether these functions are executed by hardware or software depends on the specific application and design constraints of the technical solution. Professionals and technicians can use different methods for each specific application to implement the described functions, but such implementation shall not be considered as going beyond the scope of the present invention.

The steps of the method or algorithm described in combination with the embodiments disclosed herein can be directly implemented by hardware, a software module executed by a processor, or a combination of the two. The software module can be placed in random access memory (RAM), internal memory, read-only memory (ROM), electrically programmable ROM, electrically erasable programmable ROM, registers, hard disks, removable disks, CD-ROMs, or any other form of storage medium known in the technical field.

## Claims

1. A temperature control method for an energy storage system comprising an energy storage battery, comprising:
(S01) obtaining a real-time temperature of the energy storage battery;
(S02) determining whether the energy storage battery is in a charging-and-discharging state currently or after a preset time;
(S03) controlling, in a case that the energy storage battery is not in the charging-and-discharging state, the real-time temperature of the energy storage battery within a first preset range; and
(S04) controlling, in a case that the energy storage battery is in the charging-and-discharging state, the real-time temperature of the energy storage battery within a second preset range, comprising:
(S041) comparing the real-time temperature T of the energy storage battery with a fifth threshold T5 and a sixth threshold T6, respectively, wherein the fifth threshold T5 is less than the sixth threshold T6, the fifth threshold T5 is the lower limit of the second preset range, and the sixth threshold T6 is the upper limit of the second preset range;
(S042) controlling an air conditioner to start heating in a case that the real-time temperature T is less than that the fifth threshold T5; and
(S043) controlling the air conditioner to start cooling in a case that the real-time temperature T is greater than the sixth threshold T6;
wherein a lower limit of the first preset range is less than a lower limit of the second preset range, and an upper limit of the first preset range is greater than an upper limit of the second preset range.

2. The method according to claim 1, wherein the controlling the real-time temperature of the energy storage battery within the first preset range comprises:
(S031) comparing the real-time temperature T of the energy storage battery with a first threshold T1, a second threshold T2, a third threshold T3, and a fourth threshold T4, respectively, wherein the first threshold T1, the second threshold T2, the third threshold T3, and the fourth threshold T4 are in ascending order, the first threshold T1 is the lower limit of the first preset range, and the fourth threshold T4 is the upper limit of the first preset range;
(S032) turning on an air conditioner to start heating in a case that the real-time temperature T is less that the first threshold T1;
(S033) turning off the air conditioner in a case that the real-time temperature T is greater than or equal to the second threshold T2 and less than or equal to the third threshold T3; and
(S034) turning on the air conditioner to start cooling in a case that the real-time temperature T is greater than the fourth threshold T4.

3. The method according to any one of claims 1 to 2, wherein the real-time temperature of the energy storage battery is represented by a real-time ambient temperature of the energy storage battery or a real-time battery cell temperature of the energy storage battery.

4. The method according to claim 3, wherein in a case that the real time temperature of the energy storage battery is represented by the real time ambient temperature of the energy storage battery the real-time ambient temperature of the energy storage battery is represented by a temperature of a return air outlet of an air conditioner.

5. An energy management system, comprising:
an obtaining unit, configured to obtaining a real-time temperature of an energy storage battery;
a control unit, configured to:
determine whether the energy storage battery is in a charging-and-discharging state currently or after a preset time;
control the real-time temperature of the energy storage battery within a first preset range in a case that the energy storage battery is not in the charging-and-discharging state; and
control the real-time temperature of the energy storage battery within a second preset range in a case that the energy storage battery is in the charging-and-discharging state, comprising:
compare the real-time temperature T of the energy storage battery with a fifth threshold T5 and a sixth threshold T6, respectively, wherein the fifth threshold T5 is less than the sixth threshold T6, the fifth threshold T5 is the lower limit of the second preset range, and the sixth threshold T6 is the upper limit of the second preset range;
control the air conditioner to start heating in a case that the real-time temperature T is less than that the fifth threshold T5; and
control the air conditioner to start cooling in a case that the real-time temperature T is greater than the sixth threshold T6;
wherein a lower limit of the first preset range is less than a lower limit of the second preset range, and an upper limit of the first preset range is greater than an upper limit of the second preset range.

6. The system according to claim 5, wherein, to control the real-time temperature of the energy storage battery within the first preset range, the control unit is further configured to:
compare the real-time temperature T of the energy storage battery with a first threshold T 1, a second threshold T2, a third threshold T3, and a fourth threshold T4, respectively, wherein the first threshold T1, the second threshold T2, the third threshold T3, and the fourth threshold T4 are in ascending order, the first threshold T1 is the lower limit of the first preset range, and the fourth threshold T4 is the upper limit of the first preset range;
turn on an air conditioner to start heating in a case that the real-time temperature T is less that the first threshold T1;
turn off the air conditioner in a case that the real-time temperature T is greater than or equal to the second threshold T2 and less than or equal to the third threshold T3; and
turn on the air conditioner to start cooling in a case that the real-time temperature T is greater than the fourth threshold T4.

7. The system according to any one of claims 5 to 6, wherein the real-time temperature of the energy storage battery is represented by a real-time ambient temperature of the energy storage battery or a real-time battery cell temperature of the energy storage battery.

8. The system according to claim 7, wherein in a case that the real-time temperature of the energy storage battery is represented by the real-time ambient temperature of the energy storage battery, the real-time ambient temperature of the energy storage battery is represented by a temperature of a return air outlet of an air conditioner.

## Patentansprüche

1. Temperatursteuerverfahren für ein Energiespeichersystem, das eine Energiespeicherbatterie umfasst, das Folgendes umfasst:
(S01) Erhalten einer Echtzeittemperatur der Energiespeicherbatterie;
(S02) Bestimmen, ob sich die Energiespeicherbatterie derzeit oder nach einer voreingestellten Zeit in einem Lade- und Entladezustand befindet;
(S03) in einem Fall, in dem sich die Energiespeicherbatterie nicht im Lade- und Entladezustand befindet, Steuern der Echtzeittemperatur der Energiespeicherbatterie in einem ersten voreingestellten Bereich und
(S04) in einem Fall, in dem sich die Energiespeicherbatterie im Lade- und Entladezustand befindet, Steuern der Echtzeittemperatur der Energiespeicherbatterie in einem zweiten voreingestellten Bereich, was Folgendes umfasst:
(S041) Vergleichen der Echtzeittemperatur T der Energiespeicherbatterie mit einem fünften Schwellwert T5 bzw. einem sechsten Schwellwert T6, wobei der fünfte Schwellwert T5 kleiner ist als der sechste Schwellwert T6, der fünfte Schwellwert T5 der untere Grenzwert des zweiten voreingestellten Bereichs ist und der sechste Schwellwert T6 der obere Grenzwert des zweiten voreingestellten Bereichs ist;
(S042) in einem Fall, in dem die Echtzeittemperatur T kleiner ist als der fünfte Schwellwert T5, Steuern einer Klimaanlage zum Starten des Heizens und
(S043) in einem Fall, in dem die Echtzeittemperatur T größer ist als der sechste Schwellwert T6, Steuern der Klimaanlage zum Starten des Kühlens;
wobei ein unterer Grenzwert des ersten voreingestellten Bereichs kleiner ist als ein unterer Grenzwert des zweiten voreingestellten Bereichs und ein oberer Grenzwert des ersten voreingestellten Bereichs größer ist als ein oberer Grenzwert des zweiten voreingestellten Bereichs.

2. Verfahren nach Anspruch 1, wobei das Steuern der Echtzeittemperatur der Energiespeicherbatterie im ersten voreingestellten Bereich Folgendes umfasst:
(S031) Vergleichen der Echtzeittemperatur T der Energiespeicherbatterie mit einem ersten Schwellwert T1, einem zweiten Schwellwert T2, einem dritten Schwellwert T3 bzw. einem vierten Schwellwert T4, wobei der erste Schwellwert T1, der zweite Schwellwert T2, der dritte Schwellwert T3 und der vierte Schwellwert T4 in einer Reihenfolge aufsteigen, der erste Schwellwert T1 der untere Grenzwert des ersten voreingestellten Bereichs ist und der vierte Schwellwert T4 der obere Grenzwert des ersten voreingestellten Bereichs ist;
(S032) in einem Fall, in dem die Echtzeittemperatur T kleiner ist als der erste Schwellwert T1, Einschalten einer Klimaanlage zum Starten des Heizens;
(S033) in einem Fall, in dem die Echtzeittemperatur T größer als oder gleich dem zweiten Schwellwert T2 ist und kleiner als oder gleich dem dritten Schwellwert T3 ist, Ausschalten der Klimaanlage und
(S034) in einem Fall, in dem die Echtzeittemperatur T größer ist als der vierte Schwellwert T4, Einschalten der Klimaanlage zum Starten des Kühlens.

3. Verfahren nach einem der Ansprüche 1 bis 2, wobei die Echtzeittemperatur der Energiespeicherbatterie durch eine Echtzeitumgebungstemperatur der Energiespeicherbatterie oder eine Echtzeitbatteriezellentemperatur der Energiespeicherbatterie repräsentiert wird.

4. Verfahren nach Anspruch 3, wobei in einem Fall, in dem die Echtzeittemperatur der Energiespeicherbatterie durch die Echtzeitumgebungstemperatur der Energiespeicherbatterie repräsentiert wird, die Echtzeitumgebungstemperatur der Energiespeicherbatterie durch eine Temperatur eines Rückluftauslasses einer Klimaanlage repräsentiert wird.

5. Energieverwaltungssystem, das Folgendes umfasst:
eine Erhaltungseinheit, die dazu ausgelegt ist, eine Echtzeittemperatur einer Energiespeicherbatterie zu erhalten;
eine Steuereinheit, die zu Folgendem ausgelegt ist:
Bestimmen, ob sich die Energiespeicherbatterie derzeit oder nach einer voreingestellten Zeit in einem Lade- und Entladezustand befindet;
in einem Fall, in dem sich die Energiespeicherbatterie nicht im Lade- und Entladezustand befindet, Steuern der Echtzeittemperatur der Energiespeicherbatterie in einem ersten voreingestellten Bereich und
in einem Fall, in dem sich die Energiespeicherbatterie im Lade- und Entladezustand befindet, Steuern der Echtzeittemperatur der Energiespeicherbatterie in einem zweiten voreingestellten Bereich, was Folgendes umfasst:
Vergleichen der Echtzeittemperatur T der Energiespeicherbatterie mit einem fünften Schwellwert T5 bzw. einem sechsten Schwellwert T6, wobei der fünfte Schwellwert T5 kleiner ist als der sechste Schwellwert T6, der fünfte Schwellwert T5 der untere Grenzwert des zweiten voreingestellten Bereichs ist und der sechste Schwellwert T6 der obere Grenzwert des zweiten voreingestellten Bereichs ist;
in einem Fall, in dem die Echtzeittemperatur T kleiner ist als das der fünfte Schwellwert T5, Steuern der Klimaanlage zum Starten des Heizens und
in einem Fall, in dem die Echtzeittemperatur T größer ist als der sechste Schwellwert T6, Steuern der Klimaanlage zum Starten des Kühlens;
wobei ein unterer Grenzwert des ersten voreingestellten Bereichs kleiner ist als ein unterer Grenzwert des zweiten voreingestellten Bereichs und ein oberer Grenzwert des ersten voreingestellten Bereichs größer ist als ein oberer Grenzwert des zweiten voreingestellten Bereichs.

6. System nach Anspruch 5, wobei die Steuereinheit zum Steuern der Echtzeittemperatur der Energiespeicherbatterie im ersten voreingestellten Bereich ferner zu Folgendem ausgelegt ist:
Vergleichen der Echtzeittemperatur T der Energiespeicherbatterie mit einem ersten Schwellwert T1, einem zweiten Schwellwert T2, einem dritten Schwellwert T3 bzw. einem vierten Schwellwert T4, wobei der erste Schwellwert T1, der zweite Schwellwert T2, der dritte Schwellwert T3 und der vierte Schwellwert T4 in einer Reihenfolge aufsteigen, der erste Schwellwert T1 der untere Grenzwert des ersten voreingestellten Bereichs ist und der vierte Schwellwert T4 der obere Grenzwert des ersten voreingestellten Bereichs ist;
in einem Fall, in dem die Echtzeittemperatur T kleiner ist als der erste Schwellwert T1, Einschalten einer Klimaanlage zum Starten des Heizens;
in einem Fall, in dem die Echtzeittemperatur T größer als oder gleich dem zweiten Schwellwert T2 ist und kleiner als oder gleich dem dritten Schwellwert T3 ist, Ausschalten der Klimaanlage und
in einem Fall, in dem die Echtzeittemperatur T größer ist als der vierte Schwellwert T4, Einschalten der Klimaanlage zum Starten des Kühlens.

7. System nach einem der Ansprüche 5 bis 6, wobei die Echtzeittemperatur der Energiespeicherbatterie durch eine Echtzeitumgebungstemperatur der Energiespeicherbatterie oder eine Echtzeitbatteriezellentemperatur der Energiespeicherbatterie repräsentiert wird.

8. System nach Anspruch 7, wobei in einem Fall, in dem die Echtzeittemperatur der Energiespeicherbatterie durch die Echtzeitumgebungstemperatur der Energiespeicherbatterie repräsentiert wird, die Echtzeitumgebungstemperatur der Energiespeicherbatterie durch eine Temperatur eines Rückluftauslasses einer Klimaanlage repräsentiert wird.

## Revendications

1. Procédé de régulation de la température pour un système de stockage d'énergie comprenant une batterie de stockage d'énergie, le procédé comprenant les étapes suivantes :
(501) obtenir une température en temps réel de la batterie de stockage d'énergie ;
(S02) déterminer si la batterie de stockage d'énergie est dans un état de charge et de décharge, actuellement, ou après un temps prédéfini ;
(S03) réguler, dans le cas où la batterie de stockage d'énergie n'est pas dans l'état de charge et de décharge, la température en temps réel de la batterie de stockage d'énergie dans une première plage prédéfinie ; et
(S04) réguler, dans le cas où la batterie de stockage d'énergie est dans l'état de charge et de décharge, la température en temps réel de la batterie de stockage d'énergie dans une seconde plage prédéfinie, ce qui comprend les étapes suivantes :
(S041) comparer la température en temps réel T de la batterie de stockage d'énergie avec un cinquième seuil T5 et un sixième seuil T6, respectivement, le cinquième seuil T5 étant inférieur au sixième seuil T6, le cinquième seuil T5 étant la limite inférieure de la seconde plage prédéfinie, et le sixième seuil T6 étant la limite supérieure de la seconde plage prédéfinie ;
(S042) commander un climatiseur pour qu'il commence à chauffer dans le cas où la température en temps réel T est inférieure au cinquième seuil T5 ; et
(S043) commander le climatiseur pour qu'il commence à refroidir dans le cas où la température en temps réel T est supérieure au sixième seuil T6 ;
où une limite inférieure de la première plage prédéfinie est inférieure à une limite inférieure de la seconde plage prédéfinie, et une limite supérieure de la première plage prédéfinie est supérieure à une limite supérieure de la seconde plage prédéfinie.

2. Procédé selon la revendication 1, dans lequel la régulation de la température en temps réel de la batterie de stockage d'énergie dans la première plage prédéfinie comprend les étapes suivantes :
(S031) comparer la température en temps réel T de la batterie de stockage d'énergie à un premier seuil T1, un deuxième seuil T2, un troisième seuil T3 et un quatrième seuil T4, respectivement, où le premier seuil T1, le deuxième seuil T2, le troisième seuil T3 et le quatrième seuil T4 sont en ordre croissant, le premier seuil T1 est la limite inférieure de la première plage prédéfinie et le quatrième seuil T4 est la limite supérieure de la première plage prédéfinie ;
(S032) mettre en marche un climatiseur pour qu'il commence à chauffer dans le cas où la température en temps réel T est inférieure au premier seuil T1 ;
(S033) arrêter le climatiseur dans le cas où la température en temps réel T est supérieure ou égale au deuxième seuil T2 et inférieure ou égale au troisième seuil T3 ; et
(S034) mettre en marche le climatiseur pour qu'il commence à refroidir dans le cas où la température en temps réel T est supérieure au quatrième seuil T4.

3. Procédé selon l'une quelconque des revendications 1 à 2, dans lequel la température en temps réel de la batterie de stockage d'énergie est représentée par une température ambiante en temps réel de la batterie de stockage d'énergie ou une température de cellule de batterie en temps réel de la batterie de stockage d'énergie.

4. Procédé selon la revendication 3, dans lequel, dans un cas où la température en temps réel de la batterie de stockage d'énergie est représentée par la température ambiante en temps réel de la batterie de stockage d'énergie, la température ambiante en temps réel de la batterie de stockage d'énergie est représentée par une température d'une sortie d'air de retour d'un climatiseur.

5. Système de gestion de l'énergie comprenant :
une unité d'obtention, configurée pour obtenir une température en temps réel d'une batterie de stockage d'énergie ;
une unité de commande, configurée pour :
déterminer si la batterie de stockage d'énergie est dans un état de charge et de décharge, actuellement ou après un temps prédéfini ;
réguler la température en temps réel de la batterie de stockage d'énergie dans une première plage prédéfinie dans le cas où la batterie de stockage d'énergie n'est pas dans l'état de charge et de décharge ; et
réguler la température en temps réel de la batterie de stockage d'énergie dans une seconde plage prédéfinie dans le cas où la batterie de stockage d'énergie est dans l'état de charge et de décharge, ce qui comprend les étapes suivantes :
comparer la température en temps réel T de la batterie de stockage d'énergie avec un cinquième seuil T5 et un sixième seuil T6, respectivement, le cinquième seuil T5 étant inférieur au sixième seuil T6, le cinquième seuil T5 étant la limite inférieure de la seconde plage prédéfinie, et le sixième seuil T6 étant la limite supérieure de la seconde plage prédéfinie ;
commander le climatiseur pour qu'il commence à chauffer dans le cas où la température en temps réel T est inférieure au cinquième seuil T5 ; et
commander le climatiseur pour qu'il commence à refroidir dans le cas où la température en temps réel T est supérieure au sixième seuil T6 ;
où une limite inférieure de la première plage prédéfinie est inférieure à une limite inférieure de la seconde plage prédéfinie, et une limite supérieure de la première plage prédéfinie est supérieure à une limite supérieure de la seconde plage prédéfinie.

6. Système selon la revendication 5, dans lequel, pour réguler la température en temps réel de la batterie de stockage d'énergie dans la première plage prédéfinie, l'unité de commande est en outre configurée pour :
comparer la température en temps réel T de la batterie de stockage d'énergie à un premier seuil T1, un deuxième seuil T2, un troisième seuil T3 et un quatrième seuil T4, respectivement, le premier seuil T1, le deuxième seuil T2, le troisième seuil T3 et le quatrième seuil T4 étant en ordre croissant, le premier seuil T1 étant la limite inférieure de la première plage prédéfinie et le quatrième seuil T4 étant la limite supérieure de la première plage prédéfinie ;
mettre en marche un climatiseur pour qu'il commence à chauffer dans le cas où la température en temps réel T est inférieure au premier seuil T1 ;
arrêter le climatiseur dans le cas où la température en temps réel T est supérieure ou égale au deuxième seuil T2 et inférieure ou égale au troisième seuil T3 ; et
mettre en marche le climatiseur pour qu'il commence à refroidir dans le cas où la température en temps réel T est supérieure au quatrième seuil T4.

7. Système selon l'une quelconque des revendications 5 à 6, dans lequel la température en temps réel de la batterie de stockage d'énergie est représentée par la température ambiante en temps réel de la batterie de stockage d'énergie ou une température de cellule de batterie en temps réel de la batterie de stockage d'énergie.

8. Système selon la revendication 7, dans lequel, dans un cas où la température en temps réel de la batterie de stockage d'énergie est représentée par la température ambiante en temps réel de la batterie de stockage d'énergie, la température ambiante en temps réel de la batterie de stockage d'énergie est représentée par une température d'une sortie d'air de retour d'un climatiseur.
